(19) **Europäisches Patentamt**

**European Patent Office**

**Office européen des brevets**

(11) **EP 1 256 875 A1**

(12) **EUROPEAN PATENT APPLICATION**

(43) Date of publication:
**13.11.2002 Bulletin 2002/46**

(51) Int Cl.⁷: $G06F\ 9/44$

(21) Application number: **01111442.8**

(22) Date of filing: **10.05.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI**<br><br>(71) Applicant: **Nokia Corporation**<br>**02150 Espoo (FI)** | (72) Inventor: **Theimer, Wolfgang**<br>**44879 Bochum (DE)**<br><br>(74) Representative: **Becker Kurig Straus**<br>**Patentanwälte**<br>**Bavariastrasse 7**<br>**80336 München (DE)** |

(54) **Method and device for context dependent user input prediction**

(57)    The invention relates to a method for context-dependent user input prediction for at least one device in the environment of at least one user comprising the steps of: detecting the parameters of the actual states of said at least one device, comparing said detected parameters with previously saved parameters of said at least one device, obtaining a most probable next input proposal according to the result of the comparison, and offering said input proposal to at least one user.

Fig. 1

Printed by Jouve, 75001 PARIS (FR)

**Description**

The present invention relates generally to input procedures and to electronic devices with a plurality of possible input parameters. More specifically, the present invention relates to user input prediction, which helps to improve the usability of complex electronic devices with a minimum of required user input. The present invention relates to user specific devices or user unspecific devices with improved usability and minimised necessary user input. The present invention relates to a method to improve interface design of electronic devices, too.

Actual complex devices or device clusters with a multitude of possible states or features such as e.g. navigation systems in automobiles require a lot of input until a special navigation can be executed. An internet access point with a multitude of possible inputs is usually used according to preferred access pattern, e.g. people tend to check their e-mail first and then join their preferred chat-rooms or browse for certain keywords in the net. Another example is the tendency that people develop certain behaviour patterns in which certain combinations of actuated devices and/ or certain coincidences are recurring.

The presence of devices or device clusters with a nearly unlimited potential of inputs, features or feature combinations, in which a single user may forget how a certain definite feature can be accessed -because it is too rarely used- shows the need for an input assistance. Especially in systems with a "soft" interface such as computer programs, video recorders with on screen display, cars, navigation systems and the like, the tendency to develop a behaviour pattern enhances input problems, especially if the user leaves his normal input path, or forgets a certain input and gets lost in a multitude of alternatives trying to get back to the known path.

In order to prevent that people have to use a lot of time to search for a certain input, and to prevent that people have to waste too many thoughts on items they might forget, there is a need for a device and a method for input prediction in an electronic device.

The present invention uses the tendency of people to develop certain behaviour patterns. People tend to develop these behaviour patterns nearly in every environment, they are living in. Therefore, the present invention is applicable to nearly every device people are using.

The object of the present invention is therefore to provide a method and related device for context dependent user input prediction which offers to the user the most probable next input on the basis of previous input patterns.

This is achieved according to one aspect of the present invention by a method for context-dependent user input prediction for at least one device in the environment of at least one user comprising the steps of: detecting the parameters of the states of at least one device, comparing said detected parameters with previously saved parameters, obtaining a most probable input proposal according to the result of the comparison, and offering the input proposal to at least one user.

By comparing a present state with previously saved states the system can help a user or a user support program to train a user to execute the desired input, to achieve a certain result. E.g. a safety system in a vehicle can offer to turn on the lights if the windshield wipers were actuated for more than 1 minute. In this embodiment of the present invention, the pre-saved parameters and the comparing algorithm may be updated regularly.

Preferably, the method further comprises an identifying step to identify one or more users. By identifying the user, the access of the system can be limited.

Advantageously, the parameters of the state are handled as vectors. By using vectors, mathematics can be used to describe and process the parameters of the state of a device in a simple and fast way. The vectors are state vectors. The system which is operated by a user is described by a state before the user has made any input and makes a transition to a new state after the input is finished. State vectors have multiple dimensions, with different ranges in the value of the single parameters. The vector can comprise time and location related parameters, and other state related parameters. The system can compare the different parameters by calculating the difference vectors between the actual vector and the saved vectors. The vector with the shortest difference vector is the most similar vector. The difference vector is directly related to an input required to reach the state related to the most similar state vector.

Conveniently, the user input prediction method further comprises the step of changing parameters according to the reaction to said input proposal or other input. By changing parameters according to the input, the system reacts by changing the state of the device by virtue of a single yes/no input. With this, a single unspecific input replaces multiple specific inputs normally required to change the state of a device. With this, the system updates itself continually and supports the user actively by reducing the number of possible and probable states.

Preferably, the input prediction method further comprises the step of saving the detected parameters of said at least one device. By saving the states of the device, the system can store the behaviour pattern of the user or the state pattern of the devices. This leads to a feed back of past behaviour to present behaviour. This method offers a user to find similar or related situations. In this stage the system recalls previous and similar situations.

Advantageously, the parameters include environmental data. By detecting circumstances in which a certain input is made, the input proposal to change the state is getting more precise. The state vector comprises more parameters, so the number of similar state vectors in a state is reduced thereby decreasing the number of possible inputs to be offered. Environmental data can be related to the position, time, temperature, to weather conditions, or the state of devices in the environment of the device. Other parameters can be e.g. the overall power consumption, to detect malfunctions or other data like if a certain device with a characteristic power consumption is activated. Other environmental data can be related to temperature, sunshine, pollution, toxicity, data of vision- of radar- IR- systems, user related data, e.g. temperature and heart frequency, especially the changes in the parameters. Even the Fourier-transformations of one or more parameters can be used as parameters.

Conveniently, the input prediction method further comprises the step of weighing said saved parameters. By weighing the parameters, the feedback loop is closed, enabling the system to decide if an offer should be made, or has been rejected previously. E.g. a current state vector x without user input, i.e. the pure context, is compared with all stored state vectors $\mathbf{x}_i$ to find similarities. If similar state vectors $\mathbf{x}_i$ exist, the most similar state vector $\mathbf{x}_i$ (with its user input) is suggested to the user via a user interface as the most probable input. The user can then accept this choice, thereby increasing its score and probability for future suggestions, ignore it or reject the choice, thereby decreasing its score for future suggestions. The state of the system is described by a vector $\mathbf{x}_i = (\mathbf{a}_i, a_{newi}, \mathbf{p}_i, t_i, t_{si}, \mathbf{u}_i, f_i)^T$, where $\mathbf{a}_i$ denotes the vector of active applications before user input, $a_{newi}$ is the (possibly new) application started or affected by the user input, $\mathbf{p}_i$ is the 3D position of the device when the user starts input, $t_i$ is the start time of user input, $t_{si}$ is the start-up time of the terminal before the input can be given, $\mathbf{u}_i$ denotes the sequence of user input events (e.g. key strokes, voice input or gestures) and $f_i$ represents the frequency of use for the state vector $\mathbf{x}_i$. So $\mathbf{x}_i$ describes the state before user input and the input itself leading to a new state plus how often this specific state vector has been reused by the user.

The vector $\mathbf{a}_i$ of active applications or the state of one ore more devices and environmental data before user input starts is given as $\mathbf{a}_i = (a_1, a_2, ..., a_N, 0, ...0)^T$, where all possible applications are enumerated starting with 1 and the active applications are listed. The number of active applications is given as $N$ and the maximum number of active applications is limited to $N_a$. So the vector $\mathbf{a}_i$ has the dimension $N_a$. The $N$ active applications can be sorted in ascending order: $a_1 < a_2 < ... < a_N$. The application started or modified by user input is denoted by $a_{newi}$, again as a application identification like for $\mathbf{a}_i$.

The position vector $\mathbf{p}_i$ describes the spatial context in which the user input $u_i$ is made. It is a three-dimensional vector with the position data where the user started an input i. The resolution of $\mathbf{p}_i$ can be adjusted according to the device capabilities: In case of a GPS receiver the resolution can be on the order of meters, for cellular positioning it might be 100 m or the diameter of a cell in the wireless infrastructure. A position vector is a useful feature in an mobile environment, but the invention can be applied to static devices e.g. in a household too.

The time of user input $t_i$ as well as the system start-up time $t_{si}$ (last boot time of the device) is measured in minutes instead of seconds or on an even more fine-grained time scale since user input does not occur with exact timing. If the input prediction system is used in a multi-device environment, the number of time parameters can be increased to be able to easily detect hidden input correlation.

The user input $\mathbf{u}_i$ can be stored as a sequence of input events $\mathbf{u}_i = (u_1, u_2, ..., u_M, 0, ...0)^T$. How the input is actually executed, if the user presses keys, says a voice command or shows a gesture is not important. The system may even accept non-human user input e.g. an animal communication and feeding system. The number of user input events can be limited to $N_u$ events: $M \le N_u$.

The last entry $f_i$ describes how frequently a state vector $\mathbf{x}_i$ is recalled for input proposals. It ranges between 0 (no recall at all) and 1 (recalled regularly). The last entry $f_i$ can be a vector, e.g. to enable the system to store the behaviour patterns of a multiple users.

In a multi-user environment a single input pattern prediction system may accept input from multiple users at the same time, so the exact form of the vector or the vectors to be used is not fixed. The user input vector can be coupled to an originator, or the system may process the data for each user separately.

The system can propose to enter input information $\mathbf{u}_i$ instead of the user input if the similarity or distance of the current system state $\mathbf{x}$ to any of the stored system states $\mathbf{x}_i$ before previous input happened can be quantified. If this is solved the system can continuously compare the current state with all the stored states. If the distances are small enough, the system can propose the most similar state vector and the affected / activated application is shown to the user as the most likely input. One definition of distance measures is straightforward:

The differences between the current application state $\mathbf{a}$ and the situations $\mathbf{a}_i$ before user input $\mathbf{u}_i$ is given as $d_a(\mathbf{a}, \mathbf{a}_i) = \|\mathbf{a}-\mathbf{a}_i\|$.

The position distance between the current position $\mathbf{p}$ and the position $\mathbf{p}_i$ where user input $\mathbf{u}_i$ was made is defined as the Euclidean distance $d_p(\mathbf{p}, \mathbf{p}_i) = \|\mathbf{p}-\mathbf{p}_i\|$.

The recurrence of input patterns $\mathbf{u}_i$ is described with two different distance measures: First, the user input occurs during a time span after switching on the device. This means that the current time $t$ is compared with the boot time $t_{si}$. This time span should be the same as the time lag of input $\mathbf{u}_i$ after boot time $t_{si}$: $d_{ts}(t, t_s, t_i, t_{si}) = \| (t - t_s) - (t_i - t_{si})$

∥, where time is given in units of e.g. minutes.

Second, the user input is assumed to occur every day at about the same time: There the distance measure is defined as $d_{td}(t,t_i) = \|t - t_i\| \bmod(24*60)$, i.e. only time differences within one day (= 24*60 minutes) are taken into account. This daily repetition pattern can be generalised for other time intervals (weekly, monthly, yearly recurrence, ...). But most likely not enough input statistics will be available for longer time intervals.

The input prediction system continuously compares the current state vector **x** with stored state vectors $\mathbf{x}_i$. If one or more state vectors $\mathbf{x}_i$ fulfil all distance conditions,

$$d_a(a,a_i) < \varepsilon_a \wedge d_p(p,p_i) < \varepsilon_p \wedge (d_{ts}(t,t_s t_i,t_{si}) < \varepsilon_{ts} \vee d_{td}(t,t_i) < \varepsilon_{td})$$

then the closest state transition *l* is proposed to the user:

$$l = \arg\min (d_a + d_p + d_t)\ \forall i, \text{ where } d_t(t,t_s,t_i,t_{si}) = \min (d_{ts}(t,t_s,t_i,t_{si}),\ d_t(t,t_i)).$$

If one or more state vectors $\mathbf{x}_i$ fulfil only two distance conditions

$$(d_a < \varepsilon_a \wedge d_p < \varepsilon_p) \vee (d_a < \varepsilon_a \wedge d_t < \varepsilon_t) \vee (d_p < \varepsilon_p \wedge d_t < \varepsilon_t)$$

then the closest state transition *l* is proposed as

$$l = \arg\min \begin{cases} d_a + d_p & \text{if } (d_a < \varepsilon_a \wedge d_p < \varepsilon_p) \\ d_a + d_t & \text{if } (d_a < \varepsilon_a \wedge d_t < \varepsilon_t) \\ d_p + d_t & \text{if } (d_p < \varepsilon_p \wedge d_t < \varepsilon_t) \end{cases}.$$

If one or more state vectors $\mathbf{x}_i$ fulfil only one distance condition:

$$d_a < \varepsilon_a \vee d_p < \varepsilon_p \vee d_t < \varepsilon_t$$

then the state transition *l* is defined as

$$l = \arg\min \begin{cases} d_a & \text{if } d_a < \varepsilon_a \\ d_p & \text{if } d_p < \varepsilon_p \\ d_t & \text{if } d_t < \varepsilon_t \end{cases}.$$

If the system cannot propose any of the stored state vectors $\mathbf{x}_i$ the distance thresholds $\varepsilon_a$, $\varepsilon_p$ and $\varepsilon_t$ can be adjusted in an adaptation process: If no state vector is selected over a longer period of time, the distance thresholds are increased in time (without exceeding upper predefined limits). If too many state vectors are similar to the current state vector, those thresholds are reduced in time (without falling below minimal thresholds).

The system described so far is running automatically in the background. It consists of two operating modes:

First, recording of new state vectors $\mathbf{x}_i$ is performed when user input $\mathbf{u}_i$ occurs. In addition the deletion of obsolete state vectors is done. Whenever a new state vector $\mathbf{x}_i$ is created, the pre-set $f_i = 1$ is made. This way a new entry is preferred over older entries with reduced $f_i$ value (i.e. not used for recall regularly). The state vector with the lowest $f_i$ value is substituted by the new one if the buffer of possible state vectors is full.

Second, comparison of the current state vector **x** with the state vectors $\mathbf{x}_i$ is done. If the user accepts a system-proposed input $\mathbf{u}_i$ with state vector $\mathbf{x}_i$, the corresponding $f_i$ value is increased as $f_i := \alpha f_i + 1 - \alpha$ with $0 < \alpha < 1$ At the same time the other entries $\mathbf{x}_i$ are reduced as $f := \alpha f_i$ with $0 < \alpha < 1$ If the user rejects a system-proposed input $\mathbf{u}_i$ with state vector $\mathbf{x}_i$, the corresponding $f_i$ value is decreased as $f_i := \alpha f_i$ with $0 < \alpha < 1$.

At the same time the other entries $\mathbf{x}_i$ are increased as $f_i := \alpha f_i + 1 - \alpha$ with $0 < \alpha < 1$.

The input proposal from this agent software can be presented to the user as a highly context-sensitive soft-key, maybe as a separate key apart from the rest of the user interface elements. At the same time a graphical icon could display which application $a_{newi}$ would be started or affected when the user would accept the input proposal. In addition to the affected application the input prediction system could map the distance measure for the input proposal to a graphics element like a magic eye known from old radios in order to express the reliability of the proposal.

Once the user selects the input proposal $\mathbf{x}_i$ the input prediction system reproduces the user input $\mathbf{u}_i$ in order to automate the input.

Ideally, operating frequently used applications and features reduces to one key to be pressed by the user, i. e. pressing the accept button for the input prediction system proposal. The system will work the better the more frequently a feature is used.

In the case that specific algorithms are used, pairs of parameters which seem to be correlated can be coupled together, so that if one parameter reaches a predetermined level, the other parameter is offered to be changed accordingly.

It is possible that a user changes parameters by personal input, like coupling two parameters by connecting it by direct input or via e-mail or the like.

Together with the above mentioned user identification system, the system can adapt to different behaviour patterns of different users. The system may even recognise a certain user on characteristic initial input patterns, or characteristic environmental data.

Changes in the state of a device can occur without an input of a user, having the consequence of a user input. The system can then develop a certain behaviour pattern to avoid a certain user input automatically.

Preferably, the offered change in the state is executed automatically. By executing an input automatically, the system just informs the user of a change in the state of a device. The user can accept an input by not denying an offer. This decreases the number of necessary inputs to a minimum. This feature can be activated by a specific input, or by a predetermined value of the weight of the proposed input. The system can offer different responses to a certain offer. In the simplest case, a "one button"- solution, the user accepts the offer, or the offer was not executed. Another one button solution is "Yes" if the button is actuated long and "No" if the button is actuated for a short period of time. Two button solutions may comprise a "Yes"- and a "No"-key. The interface may comprise several other different input options like "Never ask again", "remind me later", "remind me earlier", "undo", "redo", " execute automatically" and so on.

Advantageously, the input prediction method further comprises the steps of transmitting and/or receiving data. By transmitting and receiving data, a system according to the present invention can access data, like an external time signal or position signal from a positioning system such as GLONAS (Global Navigation System) or GPS (Global Positioning System). The data can be exchanged via radio, telematic service (Short Message System), e-mail, IR-connections Bluetooth, a wired connection. By using data transfer the system can be distributed between a mobile input device and a remote service unit. The service unit can be a service computer being connected to a personal input device via radio, and to different input devices via a wired connection.

Conveniently, the input prediction method further comprises the step of compressing the data. By compressing the data, the amount of stored state vectors, or the amount of stored parameters can be increased, of the time intervals between the detection of states of a device can be decreased, increasing the dynamic of the input prediction system.

According to another aspect of the present invention the object of the present invention is achieved by a computer program comprising program code means for performing the steps, describes in the embodiments of the method for the input prediction method, when the program is run on a computer or a mobile terminal device. By using the program on a computer, a user behaviour pattern can be used to prevent that a user have to restart the com

According to yet another aspect of the present invention, a computer program product is provided that comprises program code means stored on a computer readable medium for performing the embodiments of the above mentioned user input prediction method, when said program product is run on a computer, a personal interface device, a mobile terminal device and so on.

According to yet another additional aspect of the present invention an electronic device capable of context-dependent user input prediction is provided, which comprises: means for storing parameters, means for detecting the parameters of the state of at least one device, means for comparing said detected parameters of said at least one device with previously saved parameters, means for offering changes of the parameters of said at least one device, and means for user input. By means for storing parameters, the present invention is capable of being trainable, to certain behaviour patterns, of a certain user. but the system can be pre-trained too. Means for detecting parameters is a necessary feature, to be able to detect the state and the circumstances of an input, a device or a device cluster.

Preferably, the device further comprises means for identifying said at least one user. Equipped with a user identification mans, the input predictions can predict behaviour patterns of different users. the user identification means can be used for selective access, e.g. that children can not access selected devices or selected inputs. The user identification can be used to pay for certain services resulting from an input. The user identification can be a SIM- (Subscriber Identification Means) card together wit a PIN number, or other personal identification means. The input device can be incorporated in a mobile phone, a palmtop computer or the like, which are usually protected against unauthorised access.

Advantageously, the device comprises means for transforming said parameters of the state of said at least one device into state vectors. The use of state vectors makes it possible to use well known mathematical rules to describe and process the state related data of devices. The algorithms for processing the data can be used independently from the actual device, the structure of the input pattern. For the mathematical algorithm ist is not important if the parameter describes a position in time, space, a temperature, a loudness, a power consumption, flow rates or any other setting of a device, or state of an environment.

Conveniently, the device further comprises means for changing parameters according to an answer to said input proposal or other input. As described above in the description of the method, the answer to the proposed input is the input which is required to train the system.

Preferably, the device further comprises means for transmitting data. Advantageously the device further comprises means for receiving data. This enables the device to access data that are normally not accessible for a single device. The exchange of data enables the system to be distributed. With data exchange an interface device can communicate with a service computer or like, to remote control the input prediction system. The data exchange can be used to train e.g. a Radio or a TV set to reduce volume if e.g. the telephone rings. The user input prediction system can be incorporated in a single device or be used to remote control several devices. The user input prediction system can be offered by a service provider to remote manage certain inputs, even if the user is actually not present. The system can e.g. offer to close windows, if sensors detect precipitation, or heavy weather conditions.

Advantageously the device further comprising input means and displaying means. These features are less important for systems with the main dedication to search for behaviour patterns, to improve e.g. the quality of a certain product. Input and display means can be separated in a single external device like a personal interface device or so. Input and display means can be incorporated in the environment of the user. For example a car with an input prediction system can be fitted with a display element, and input elements at the steering wheel or the gear change lever. In a simpler version, the standard input elements of the car can be fitted with e.g. light emitting diodes, which flash, if the input prediction system uses offers an input.

Conveniently, the device is connected to a network. With the connection to a network the system can access data, which are normally not accessible, as weather forecasts, times of sunrise and sunset and so on.

In a preferred embodiment, the device, further comprises means for changing the state of the device automatically. A perfect trained user input prediction system need no special user input, cause every possible user input is executed automatically at the best suited moment. Such a system would, if it was not turned off, e.g. during vacation open the windows turn on the lights, the Radio the TV, even if nobody is actually at home, repelling burglars, because the house seems to be inhabited.

According to another aspect of the invention an interface device for the use in a context-dependent user input prediction system is provided which comprises: means for transmitting and receiving data, means for displaying the received data, user input means. The interface device can be a universal input element connected to, or built in into at least on other device. An interface device may be integrated in a wrist watch.

Preferably the interface device further comprises means for storing data and means for calculating. With the ability to store and process data, the interface device can offer all the advantages of a input prediction system, and can be incorporated as a module into other devices to enable a input prediction feature.

According to another aspect of the present invention, a server in a network is provided, which comprises means for storing data, means for receiving data, means for comparing said received data with previously saved data, means for generating an input proposal, means for transferring data, and means for changing data. A server in a network can offer complete input prediction even with low cost equipment. If the system only transfers state related data, if the state has changed, and only which parameter of the present state has changed, the amount of data to be transferred can be minimised.

Preferably, the data transferred is related to the state of devices remote from the server. With such a system input prediction can be offered with devices with relatively low calculation power, and the ability to be remote controlled via a network.

The behaviour patterns of a user can be used to improve the input speed on these input patterns, but they can be used to improve the input itself. In some computer programs a user can combine several inputs to input chains, where the computer only need one input to execute the whole chain. The merit of this invention is that the system itself can offer the user to execute multiple inputs, if he is used to do so. The system can be able to offer the creation of input chains, if the TBI (Time between inputs) is below a determined value.

As people are starting to deal with behaviour patterns, even an inverted use of input patterns can be used to improve technical devices. The usability of the method or the idea are not limited at all. E.g. Inverted behaviour pattern input can be used in simulators to improve the actual accuracy of training in a simulator, to prevent a standard behaviour pattern in case of an undefined emergency. E.g. a pilot's training program should not follow the preferences of a certain examiner.

An additional aspect of paramount importance resides in a service not only putting up personal behaviour data of a large amount of persons leading to an information base wherein new devices may be designed, which are optimised in design, durability, and especially in possible input paths. Imagine people have enough money to spend it for an input prediction system, and they send you their personal behaviour data. The amount of data, even low-level motion data that can be derived from location data of mobile phones, being deleted without deriving cumulative behaviour patterns, is a waste of data resources. The data that are usually provided by polling institutes and inquiries, only because people not yet recognised the value of big data streams. Data streams can help to determine the actual spread, and the actual use of the devices, connected to the input prediction system.

In the following, the invention will be described in detail by the way of non limiting examples referring to the enclosed drawings in which:

Figure 1 is an embodiment of a user input prediction system, which is implemented in a device with limited calculation power.

Figure 2 is an embodiment of a user input prediction system with a spread devices in the environment of a user.

Figure 3 is an embodiment of the present invention, wherein said user input prediction system is implemented in a vehicle.

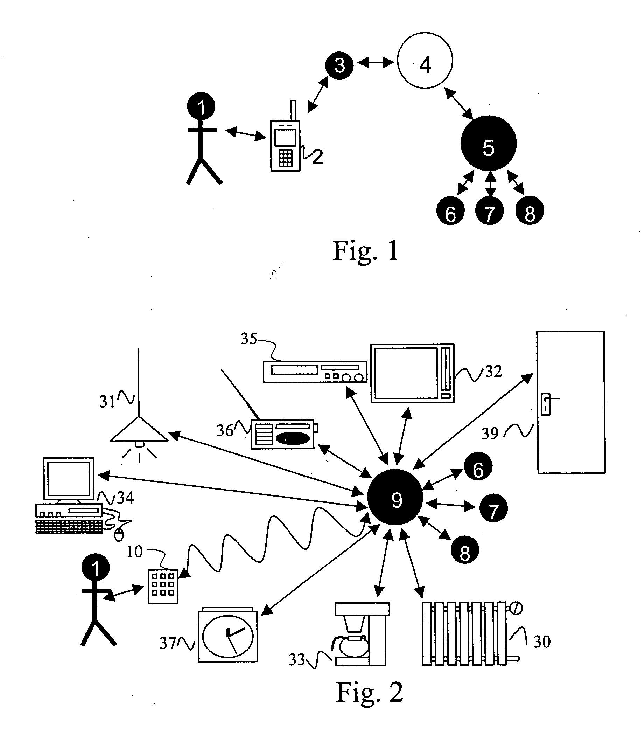

Figure 1 describes an embodiment of the present invention, in which the present invention is adapted to be used with a low weight, low cost terminal device, with low calculation and processing power. The present example describes a mobile phone, which transfers position data and other user specific data via WAP 3 (Wireless Application Protocol ) to a WAP/internet gateway 3. The data is then transferred via TCP/IP (Transfer control protocol/Internet Protocol) to a service provider 5 connected to a network 4. The service provider detects position and other data of the terminal device according to input patterns of the user, and saves them in user and device specific memory devices 6, 7, 8. If the system only stores and transmits changes in the state of the device 2 or better only stores the parameters of the state before and after an input the amount, of data to be transferred and stored is minimised. The service provider 5 tracks the user in a virtual model according to the received data. Time only changes in the state of the device don't need to be transmitted as world wide time signals are available.

With such an architecture the terminal device only needs very low processing power to provide the advantages of the present invention. The terminal device can offer the user to call a certain number, when leaving work, if the user used to call this number automatically. A distributed system is not limited in the amount of data, that can be stored or processed. Therefore a distributed input system can be used even to identify long-term behaviour patterns. If the terminal device includes a WAP browser, the system can even store and predict a browsing pattern. A WAP application would simplify the WAP browsing process, and reduce the number of necessary input. With a reduced input frequency, and reduced input variables such as Yes/No, the user can use a trained terminal device with only few keys to be pressed, making big keyboard obsolete. So the number of high quality input keys can be decreased.

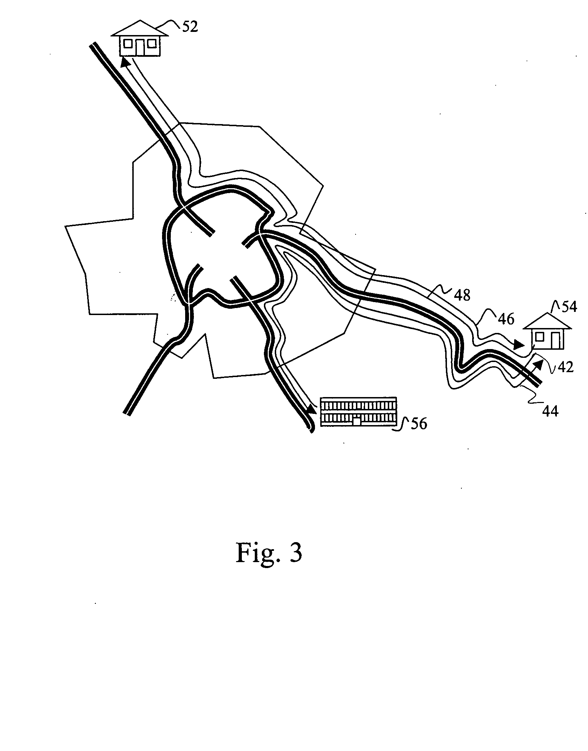

Figure 2 shows the system as it can be configured in a distributed environment with distributed single devices. The present embodiment of the invention is an input prediction system for a multitude of distributed devices which are connected to a service computer 9. The service computer is connected to several memory devices 6, 7, 8, to store all available parameter of every connected device in the environment of a user 1. The devices actually depicted are a heating 30, a lamp 31, a TV (television) set 32, a coffee machine 33, a VCR (video recorder) 35, a PC (personal computer) 34, a radio 36, an alarm clock 37 and a access system 37.

Standard conditions are that the user alarm clock 37 rings at 6 o'clock in the morning, the radio 36 was activated at 6.05, the light 31 was turned on at 6.10, the coffee machine 33 at 6.15. At latest at 7 o'clock in the morning, all activated devices where turned off, and the access system recognises that the user leaves home. At 5.55 o'clock p.m. the access system 39 recognises the return of the user, at 6.00 the heating 30 was turned on, at 6.15the PC 34 was turned on, 6.16 e-mail was checked, 6.20 radio 36 was turned on. At 8.00 p.m. the TV set 32 vas turned on 8.01 the radio 36 was turned off, at 8.15, the TV channel was changed several times, than certain video text pages where read back, than the TV set 32 was turned off. At 9.15 the PC 34 was turned off, and the TV set 32 was turned on again on a certain channel, and was turned off at 9.55 again. At 10.00 p.m. the heating 30 was turned off, the radio 36 was turned on till 10.30, and the light 31 was turned off 10.45.

In the present example, all the devices are connected to, and can be remote controlled by the service computer 9. In a first stage, the service computer 9 watches the behaviour of the user according to a feedback from the connected devices. During this stage, the user can control the devices directly, or via a personal interface device 10. Preferably, the personal interface device 10 is connected to the service computer 9 via a wireless connection. The personal interface device 10 may be integrated in a cordless telephone or in mobile phone. The interface device 10 needs at least two keys and a display. The system collects every information and stores it. The service computer 9 can store the information e.g. as vectors, containing at least one time scale and the states of the different devices. The service computer 9 recognises that, if the user leaves the environment, all the devices where turned off.

The state of the every device can be stored as a state vector, wherein every parameter of the vector is related to a setting of the device. For example the state of the lamp 31 has one parameter, which can be one of two values 0 and 1. The heating 30 has only one state, one parameter, but the parameter can comprise every value between 0 and maximum power. The state of the radio 36 has much more parameters: on/off, stereo/mono, frequency, loudness and so on. So the state of the radio 36 can be described in a state vector with at least four different parameters, wherein two of them has two discrete values, and the other two can be every value between a maximum and a minimum.

The vectors are state vectors and define different spaces with different numbers of dimensions. E.g. the lamp 31 only defines a 1-dimensional space, with only two different values. if this vector is combined with other different vectors, like the time a simple graph like that of a digital signal can be drawn. The values of the heating 30 cover a certain positive range, limited by the zero and the maximum line. The heating 30 and the lamp together with the time define a 3-dimensional space. This space can be drawn in two parallel graphs, and if the states of these two devices are saved for every day, a behaviour pattern may get visible, that e.g. the in the user is used to turn on the light 31 every morning from 6.00 to 7.00 and in the evening from 8.00 to 10.00, while the heating 30 was usually turned on at the evening 9.00 to 10.00. So the system can detect that, if the heating 30 was turned on, the light 31 was always turned on too, so that the system can offer the user to turn on the light 31 if he had turned on the heating 30. The values of the state of the two devices can be comprised in one 2-D vector.

If the vector comprises the time as an additional variable the vector comprises a 3-D space. In a 3-D space, this sounds not very exciting, but in a multidimensional space with a multitude of devices, the user can benefit from the fact that the system can save time, even in situations usually not even regarded. The main benefit of the user input prediction system is that it is searching autonomously for behaviour patterns, to reduce the overall input. The other advantage is, that the system can adapt to different situations and autonomously integrate additional devices without loosing the data referring to the standard behaviour.

A new device connected to the user input prediction system changes the dimensions of the behaviour space, with an additional device as the coffee machine 33, the TV set 32, the Personal Computer 34, and the like, the state vector is a high-dimensional vector in a high-dimensional space. A user will not fill this high dimensional state space uniformly, but will tend to develop certain input patterns, which are related to each other or to other parameters. A set of parameters can be related to different time scales. Different time scales increase the conditioning speed of the system, and help to discover long term behaviour patterns.

Every device connected to the system may comprise a single time scale, started when the device was turned on, a time scale may be restarted every day, and one time scale may be restarted every week. Longer times between single time restarts, like every month may be useful e.g. for money related transactions. Yearly restarts can be useful, but have the major drawback, that the time since the system can recognise certain patterns is too long. Estimate, that the system recognises patterns after 10 periods, without bothering the user too much, the system would need 10 years to operate satisfyingly. Ten years of operation time is longer than the average operation time of an average device. Additionally the amount of data accumulating during the term of 1 to 10 years is much greater compared to the expected benefit. But, in the future, storage space surly won't be a problem.

The depicted environment typically describes a household environment with typical household devices. The interface device 10 connects directly to a service computer, which remote controls all the devices in the household. The interface device 10 can be incorporated e.g. in a mobile phone, and therefore can be moved to different environments like to work, to a car, or to other frequently visited environments. Such an embodiment could be operated in with a service provider in a network as depicted in the figure 1, or with distributed service computers in distributed environments. The user may be identified by a personal identification means such as a SIM (Subscriber Identifications Means) or other devices. A mobile interface device 10 ensures that a service computer can contact the user, even if the user already left the environment which may require an input. This would enable the service computer e.g. to offer an absent user to turn off an oven.

If the interface device 10 is incorporated in a mobile telephone or other portable device, the user need not to learn new input methods or structures from different input devices. This seems to be no problem, as two buttons and a display won't be difficult to use, but the user input interface may consist of keys, voice recognition, gesture recognition and other human-originated input recognition means. The same difficulty is to be expected with the display element. The display can be a optical, acoustical or structural.

Figure 3 describes an embodiment of the present invention that is built into a vehicle. Compared to the situation in Figure 2, the of the vehicle or the states of devices onboard the vehicle is related to the actual position of the user and/or the vehicle. Therefore the parameters used for the input prediction comprise the actual position of the Vehicle. Even for automotive application a 3-D position vector is useful, because the actual 3-D position can indicate that the vehicle is actually in a tunnel, which causes the driver to behave different compared to on surface conditions. The rising number of electric or electronic applications replacing standard mechanical applications, open the possibility to control these applications electronically. In the present example, a user has two primary destinies: work 56 and friends 52.

The first idea of the system is, that the system detects the behaviour of the user to derive an behaviour pattern, to offer an input the user may have forgot. If the system has been trained well enough, the user can fully control his preferred personal settings of all applications of the vehicle according to his personal preferences with only a few input elements. The system can detect, at which time of the day the user usually turns the lights on, is listening to a certain radio station if he is driving to work 56, and to another if he is going to visit his friends 52. The system can automatically deactivate a navigation system if the user is entering the car at a time, the user usually uses to drive to work 56 or visit his friends 52.

The system can include external sensors to detect weather conditions, and related behaviour of the driver. The system can detect, that the user is used to open the windows near his home 54, and closes it, if he reaches the motorway always, if the external temperature is higher than 15°C. The system can offer special ventilation settings, under wet and cold conditions, even before the user starts the engine to prevent the steaming of the windows. Or the vehicle can offer to start de-icing of the windows automatically, if the user used to do so under similar weather conditions.

The system may identify a certain user by certain sensor input or by certain behaviour patterns like if the user is used to put on the security belt first and then start the engine, or the like. After being trained, the system can offer the driver to open and close the windows automatically. The vehicle adapts automatically to the behaviour patterns of the driver. The system may even adapt to a refuel behaviour, if the user prefers a certain fuel station, a certain fuel level, the cheapest station to refuel. In a first step the system asks the driver if a certain input is desired or not. This Question can easily be answered with Yes/No. The system may include other possible answers like "ask me later", "Ask me earlier", "never ask me again" or "execute always automatically".

The system may include pre-saved, preferred behaviour patterns, to increase the safety and comfort of all people. In the case of a vehicle application that includes for example, that if the user actuates the windscreen wipers, the system offers to actuate the rear window wiper, and to turn on the lights, even if the driver is not used to do so. The system can limit the running conditions of the engine, to reduce wear during warm up of the motor. In the future, the system can be used to train drivers. For example, a the behaviour pattern data can help an assurances to calculate the premium of a certain driver. Additionally, a highly pre-saved system, that can not be turned off, can help the user to get lower assurance premiums. A high-resolution input prediction system always includes a kind of a "drive recorder" that can help to analyse the condition in which an accident occurred. A high-resolution input prediction system can help to sell the car, cause the saved data can prove that the motor has not been ran under overspeed conditions.

It should be noted that state describes a state of a device, the state of the device can be on/off, related to the position, to features and settings, or even to a program which is run on the device and the like, wherein the device can be a single device such as a computer, or multiple devices in the environment of a user, which the user can access, like all the devices that can be found in a household or in a car and so on.

This application contains the description of implementations and embodiments of the present invention with the help of examples. It will be appreciated by a person skilled in the art that the present invention is not restricted to details of the embodiments presented above, and that the invention can also be implemented in another form without deviating from the characteristics of the invention. The embodiments presented above should be considered illustrative, but not restricting. Thus the possibilities of implementing and using the invention are only restricted by the enclosed claims. Consequently various options of implementing the invention as determined by the claims, including equivalent implementations, also belong to the scope of the invention.

When searching the most similar past behaviour vector by comparing the actual parameters of the actual state with previously saved parameters the system is looking for identity in most parameters which corresponds to non-weighing the parameters. The most similar state of the past is chosen.

However, if the system detects that certain applications always coincide with certain other parameters, such as time or location, it may additionally emphasize or weigh these parameters in a way that with lacking the coinciding parameters in the actual state there is never similarity to past states.

This means that certain combinations of parameters acquire a higher local probability resulting in different assessment.

## Claims

1. Method for context-dependent user input prediction for at least one device in the environment of at least one user comprising the steps of:

   detecting the parameters of the actual states of said at least one device,
   comparing said detected parameters with previously saved parameters of said at least one device,

obtaining a most probable next input proposal according to the result of the comparison,
offering said input proposal to at least one user.

2. Method according to claim 1, further comprising the step of identifying said at least one user.

3. Method according to claim 1 or 2, wherein said parameters of the state of said at least one device are handled as vectors.

4. Method according to any of the preceding claims, further comprising the step of changing parameters according to the answer of the user to said input proposal or other input.

5. Method according to one of the preceding claims, further comprising the step of saving said detected parameters of said at least one device.

6. Method according to any one of the preceding claims, wherein said parameters include environmental data.

7. Method according to any of the preceding claims, further comprising the step of weighing said saved parameters.

8. Method according to any one of the preceding claims, wherein said offered input to the user is executed automatically.

9. Computer program comprising program code means for performing all the steps of any one of the preceding claims, when said program is run on a computer or a mobile terminal device.

10. Computer program product comprising program code means stored on a computer readable medium for performing the method of any one of claims 1 to 8 when said program product is run on a computer or a mobile terminal device.

11. Electronic device capable of context-dependent user input prediction comprising:

    means for storing parameters,
    means for detecting the parameters of the state of at least one device,
    means for comparing said detected parameters of said at least one device with previously saved parameters,
    means for offering an input proposal regarding said at least one device on the basis of the comparison, and
    means for user input.

12. Device according to claim 11, further comprising means for identifying said at least one user.

13. Device according to claim 12, further comprising means for transforming said parameters of the state of said at least one device into state vectors.

14. Device according to any of claims 11 to 13, further comprising means for changing parameters according to an answer of the user to said input proposal or other input.

15. Device according to any one of the claims 11-14, further comprising means for transmitting data.

16. Device according to any of claims 11 - 15, further comprising input means and displaying means.

17. Device according to any of the claims 11 - 16, wherein said device is connected to a network.

18. Device according to any of claims 11 - 17, further comprising means for changing the state of the device automatically.

Fig. 1

Fig. 2

Fig. 3

| | European Patent Office | EUROPEAN SEARCH REPORT | Application Number EP 01 11 1442 |

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | "SMART APPLICATION SELECTION ASSISTANT" IBM TECHNICAL DISCLOSURE BULLETIN, IBM CORP., NEW YORK, US, vol. 38, no. 2, 1 February 1995 (1995-02-01), pages 353-355, XP000502502 ISSN: 0018-8689 | 1-5,8-18 | G06F9/44 |
| A | * the whole document * | 6,7 | |
| X | US 5 864 340 A (BERTRAM RANDAL LEE   ET AL) 26 January 1999 (1999-01-26) | 1,3-5, 7-11, 14-18 | |
| A | * abstract * * column 4, line 10 - line 15 * * column 11, line 3 - column 15, line 29 * | 2,6,12, 13 | |
| A | US 6 021 403 A (ROMMELSE JACOBUS A   ET AL) 1 February 2000 (2000-02-01) * abstract * * column 3, line 24 - line 49 * * column 5, line 41 - line 56 * * column 6, line 14 - line 26 * * column 7, line 20 - column 8, line 28 * * column 9, line 6 - line 24 * * column 11, line 8 - line 30 * * column 12, line 40 - line 63 * * column 17, line 14 - line 45 * * column 18, line 39 - line 20 * | 1-18 | TECHNICAL FIELDS SEARCHED (Int.Cl.7) G06F |
| A | EP 0 566 228 A (SYMANTEC CORP) 20 October 1993 (1993-10-20) * abstract * * column 2, line 27 - column 3, line 31 * * column 5, line 5 - line 57 * * column 6, line 36 - column 8, line 6 * | 1-18 | |

The present search report has been drawn up for all claims

| Place of search | Date of completion of the search | Examiner |
|---|---|---|
| THE HAGUE | 1 October 2001 | Archontopoulos, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**ANNEX TO THE EUROPEAN SEARCH REPORT
ON EUROPEAN PATENT APPLICATION NO.**                     EP 01 11 1442

This annex lists the patent family members relating to the patent documents cited in the above-mentioned European search report.
The members are as contained in the European Patent Office EDP file on
The European Patent Office is in no way liable for these particulars which are merely given for the purpose of information.

01-10-2001

| Patent document cited in search report | | Publication date | Patent family member(s) | | Publication date |
|---|---|---|---|---|---|
| US 5864340 | A | 26-01-1999 | CN | 1177146 A | 25-03-1998 |
| | | | JP | 10097365 A | 14-04-1998 |
| | | | KR | 255627 B1 | 01-05-2000 |
| US 6021403 | A | 01-02-2000 | CA | 2210601 A1 | 19-01-1998 |
| | | | CN | 1231742 A | 13-10-1999 |
| | | | EP | 0912932 A2 | 06-05-1999 |
| | | | JP | 2001510599 T | 31-07-2001 |
| | | | WO | 9803907 A2 | 29-01-1998 |
| | | | US | 6262730 B1 | 17-07-2001 |
| | | | US | 6260035 B1 | 10-07-2001 |
| | | | US | 6233570 B1 | 15-05-2001 |
| EP 0566228 | A | 20-10-1993 | US | 5388198 A | 07-02-1995 |
| | | | EP | 0566228 A2 | 20-10-1993 |

EPO FORM P0459

For more details about this annex : see Official Journal of the European Patent Office, No. 12/82